(19) Europäisches Patentamt
European Patent Office
Office européen des brevets

(11) **EP 1 716 028 B1**

(12) **EUROPÄISCHE PATENTSCHRIFT**

(45) Veröffentlichungstag und Bekanntmachung des Hinweises auf die Patenterteilung:
**14.11.2007  Patentblatt 2007/46**

(21) Anmeldenummer: **04804074.5**

(22) Anmeldetag: **20.12.2004**

(51) Int Cl.:
***B60T 1/00*** *(2006.01)*

(86) Internationale Anmeldenummer:
**PCT/EP2004/014474**

(87) Internationale Veröffentlichungsnummer:
**WO 2005/061291 (07.07.2005 Gazette 2005/27)**

(54) **STEUERVENTILEINRICHTUNG FÜR EINE INDIREKT WIRKENDE DRUCKLUFTBREMSE EINES SCHIENENFAHRZEUGS SOWIE VERFAHREN ZU DESSEN STEUERUNG**

CONTROL-VALVE DEVICE FOR AN INDIRECTLY ACTUATED COMPRESSED AIR BRAKE FOR A RAILWAY VEHICLE AND A METHOD FOR OPERATING SAID CONTROL

DISPOSITIF A SOUPAPE DE COMMANDE POUR FREIN A AIR COMPRIME A ACTION INDIRECTE D'UN VEHICULE FERROVIAIRE, ET PROCEDE POUR LA MISE EN OEUVRE D'UNE TELLE COMMANDE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **22.12.2003  DE 10360515**

(43) Veröffentlichungstag der Anmeldung:
**02.11.2006  Patentblatt 2006/44**

(73) Patentinhaber: **KNORR-BREMSE Systeme für Schienenfahrzeuge GmbH 80809 München (DE)**

(72) Erfinder: **FURTWÄNGLER, Ralf 80689 München (DE)**

(74) Vertreter: **Mattusch, Gundula c/o Knorr-Bremse AG Moosacher Strasse 80 80809 München (DE)**

(56) Entgegenhaltungen:
**EP-A- 0 032 567          DE-A1- 3 327 903**
**DE-A1- 4 101 613         DE-A1- 19 931 163**

EP 1 716 028 B1

**Beschreibung**

Stand der Technik

Die Erfindung geht aus von einer Steuerventileinrichtung für eine indirekt wirkende Druckluftbremse eines Schienenfahrzeugs, welche aus einem Reservoirdruck einen Vorsteuerdruck für ein in Abhängigkeit dieses Vorsteuerdrucks einen Hauptluftleitungsdruck aussteuerndes Relaisventil erzeugt, nach der Gattung des Patentanspruchs 1 sowie von einem Verfahren zur Steuerung der Steuerventileinrichtung nach der Gattung des Patentanspruchs 7.

Eine Steuerventileinrichtung und ein Verfahren dieser gattung sind aus dem Dokument EP-A-0032567 bekannt geworden.

Bei indirekt wirkenden Druckluftbremsen wird eine Bremsung ausgehend von einem Regelbetriebsdruck von ca. $5*10^5$ Pa durch Druckabfall in der Hauptluftleitung und das Lösen durch eine Steigerung des so erhaltenen Drucks erzielt. Dabei dient eine gattungsgemäße Steuerventileinrichtung zur Bildung des Vorsteuerdrucks für das Relaisventil, das in Abhängigkeit des Vorsteuerdrucks in der Hauptluftleitung des Zuges bzw. Fahrzeugs den Hauptluftleitungsdruck erzeugt.

Für die Regelung des Vorsteuerdrucks wird eine große Variabilität hinsichtlich der Regelungsdynamik gefordert. Denn einerseits muss für einen Füllstoß nach einer Bremsung der Hauptluftleitungsdruck abhängig vom Vorsteuerdruck rasch von einem relativ niedrigen Druck auf den Regelbetriebsdruck gesteigert werden, woraus ein großer Druckgradient resultiert.

Andererseits kann der nach einem Füllstoß zum schnellen Lösen der Zugbremsen über den Regelbetriebsdruck angestiegene Hauptluftleitungsdruck nicht beliebig schnell abgesenkt werden, da die Steuerventile aufgrund ihrer Empfindlichkeit die Zugbremsen sofort zuspannen würden. Folglich muss im Rahmen des sog. Angleichens der Hauptluftleitungsdruck innerhalb der Unempfindlichkeit der Steuerventile langsam auf den Regelbetriebsdruck zurückgeführt werden, was einen relativ kleinen Druckgradienten erfordert.

Beispielsweise wird für einen Ansprung und einen Füllstoß ein Gradient von $-1,5 * 10^5$ Pa/s bzw. $3 * 10^5$ Pa/s, für das Zuspannen und Lösen der Bremse ein Gradient von ca. $-0,2 * 10^5$ Pa/s bzw. $0,7 * 10^5$ Pa/s und für das Angleichen ein Gradient von ca. $-0,0025 * 10^5$ Pa/s benötigt.

Um diesen Anforderungen gerecht zu werden, verwenden die Steuerventileinrichtungen des Stands der Technik zum Angleichen des Vorsteuerdrucks Angleichventile in Form von stufenlos stellbaren Proportionalventile. Solche Proportionalventile sind jedoch relativ aufwendig aufgebaut und deshalb teuer.

Der Erfindung liegt demgegenüber die Aufgabe zugrunde, eine Steuerventileinrichtung der eingangs erwähnten Art derart weiter zu bilden, daß sie kostengünstiger zu fertigen ist. Außerdem soll ein Verfahren zur Steuerung der Steuerventileinrichtung angegeben werden, mit dem eine möglichst genaue Regelung des Vorsteuerdrucks möglich ist.

Erfindungsgemäß wird diese Aufgabe durch die Merkmale der Patentansprüche 1 und 7 gelöst.

Vorteile der Erfindung

Der Erfindung liegt der Gedanke zugrunde, als Angleichventil anstatt eines üblichen komplexen Proportionalventils ein im Aufbau wesentlich einfacheres Schaltventil wenigstens mit einem Anschluss für den Vorsteuerdruck und mit einem Anschluss für eine Drucksenke zu verwenden, das in einer ersten Schaltstellung den Anschluss für den Vorsteuerdruck sperrt und eine Strömungsverbindung zwischen einer Kammer und dem Anschluss für die Drucksenke herstellt und in einer zweiten Schaltstellung den Anschluss für die Drucksenke sperrt und eine Strömungsverbindung zwischen dem Anschluss für den Vorsteuerdruck und der Kammer herstellt. Ein solches Schaltventil ist wesentlich kostengünstiger als ein Proportionalventil des Stands der Technik.

Durch die erfindungsgemäße Ansteuerung wirkt das Angleichventil wie eine Schleuse, indem es in der zweiten Schaltstellung ein bestimmtes Druckluftvolumen aus einer Vorsteuerdruckleitung durch den Anschluss für den Vorsteuerdruck in die Kammer einleitet, wodurch das gesamte für den Vorsteuerdruck zur Verfügung stehende Volumen sich um das Volumen der Kammer vergrößert und folglich der Vorsteuerdruck geringfügig sinkt. Wenn nun in der ersten Schaltstellung der Anschluss für den Vorsteuerdruck gesperrt und eine Strömungsverbindung zwischen der Kammer und dem Anschluss für die Drucksenke hergestellt wird, so entweicht das zuvor in die Kammer eingeleitete Druckluftvolumen aus dieser aufgrund des Druckgefälles. Der gesperrte Anschluss für den Vorsteuerdruck verhindert dabei, dass über dieses Druckluftvolumen hinaus Druckluft in die Drucksenke entweicht.

Die Steuerung des Angleichventils zeichnet sich daher dadurch aus, dass kein stabiler Zustand mit einem stetigen Volumenstrom existiert, sondern durch seriell hintereinander abfolgende Schaltvorgänge zuerst ein begrenztes Volumen an Vorsteuerluft in die Kammer verbracht wird, welches dann aus dieser über eine Entlüftung in die Umgebung entweicht, bevor die Kammer im Rahmen des nächsten Schaltvorgangs erneut mit Vorsteuerdruckluft gefüllt wird. Mit jedem dieser Schaltzyklen wird der Vorsteuerdruck um einen kleinen Betrag gesenkt, und der Schaltzyklus solange wiederholt, bis ein vorgegebener Soll-Vorsteuerdruck erreicht ist. Wenn das Volumen der Kammer entsprechend klein ist, können auf die geschilderte Weise sehr geringe Druckgradienten und folglich eine sehr feinfühlige Regelung des Vorsteuerdrucks erzielt werden.

Durch die in den Unteransprüchen aufgeführten Maßnahmen sind vorteilhafte Weiterbildungen und Verbesserungen der im Patentanspruch 1 angegebenen Erfindung möglich.

Gemäß einer bevorzugten Ausführungsform der Erfindung ist das Angleichventil ein elektromagnetisch betätigtes 3/2-Wege-Schaltventil, welches einen weiteren, stets gesperrten Anschluss aufweist. In diesem Fall wird die Kammer beispielsweise durch eine innerhalb eines Gehäuses des 3/2-Wege-Schaltventils vorhandene Ventilkammer gebildet. Da sämtliche Funktionen durch lediglich ein einziges 3/2-Wege-Schaltventil ausgeübt werden, ist diese Lösung ist äußerst kostengünstig zu realisieren.

Alternativ kann die Kammer durch ein an das 3/2-Wege-Schaltventil angeschlossenes externes Volumen oder Behältnis gebildet werden. In diesem Fall ergibt sich eine etwas größere Variabilität hinsichtlich der Druckregelung, da das Volumen der Kammer anwendungsspezifisch angepasst werden kann.

Zeichnungen

Ausführungsbeispiele der Erfindung sind in der Zeichnung dargestellt und in der nachfolgenden Beschreibung näher erläutert. In der Zeichnung zeigt:

Fig.1    eine schematische Darstellung einer Steuerventileinrichtung für eine indirekt wirkende Druckluftbremse eines Schienenfahrzeugs gemäß der Erfindung in einer bevorzugten Ausführungsform beinhaltend ausschließlich Schaltventile;

Fig.2    eine schematische Funktionsdarstellung eines 3/2-Wege-Schaltventils gemäß einer weiteren Ausführungsform.

Beschreibung der Ausführungsbeispiele

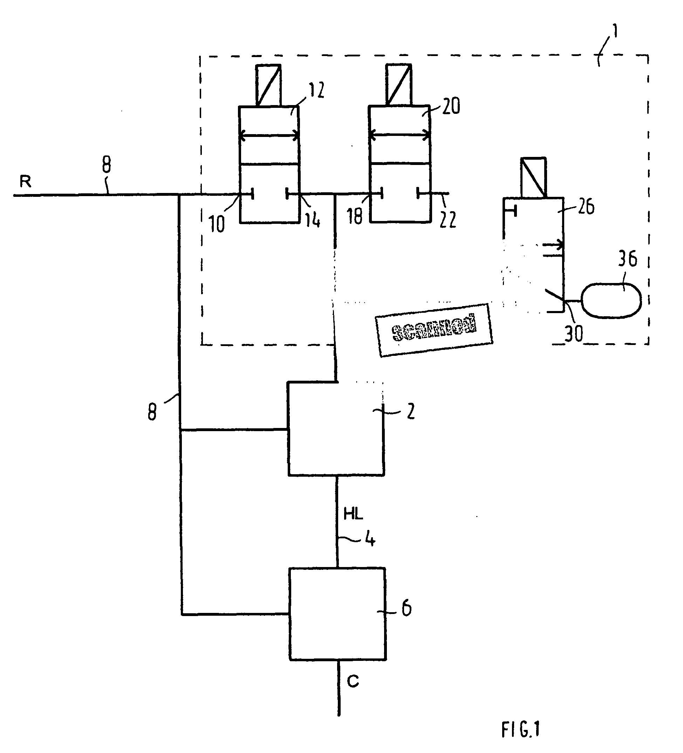

In Fig.1 ist in stark schematisierter Weise eine Steuerventileinrichtung 1 für eine indirekt wirkende Druckluftbremse eines Schienenfahrzeugs dargestellt, welche aus einem Reservoirdruck R einen Vorsteuerdruck A für ein nachgeordnetes Relaisventil 2 erzeugt, das wiederum in Abhängigkeit des Vorsteuerdrucks A in einer Hauptluftleitung 4 des Schienenfahrzeugs bzw. des ganzen Zuges einen Hauptluftleitungsdruck HL erzeugt. In Abhängigkeit des Hauptluftleitungsdrucks HL erzeugt ein weiteres Steuerventil 6 schließlich den Bremsdruck C.

Hierzu steht eine Reservoirleitung 8 mit einem nicht gezeigten, unter Reservoirdruck R stehenden Druckluftreservoir in Verbindung. Die Reservoirleitung 8 ist an einen Druckeingang 10 eines beispielsweise als elektromagnetisch betätigtes 2/2-Wegeventil ausgeführten Belüftungsventils 12 angeschlossen, dessen Druckausgang 14 über eine Vorsteuerdruckleitung 16 mit einem Druckeingang 18 eines Entlüftungsventils 20 in Verbindung steht, das ebenfalls ein elektromagnetisch betätigtes 2/2-Wegeventil ist. Der Druckausgang des Entlüftungsventils 20 wird durch eine Entlüftung 22 gebildet, die in die Umgebung entlüftet. In einer ersten, in Fig.1 gezeigten Schaltstellung sperrt das Belüftungsventil 12 seinen Druckeingang 10 gegenüber seinem Druckausgang 14, während es in einer zweiten Schaltstellung den Druckeingang 10 mit dem Druckausgang 14 verbindet. Ebenso sperrt das Entlüftungsventil 20 in einer ersten Schaltstellung seinen Druckeingang 18 gegenüber der Entlüftung 22, während in der zweiten Schaltstellung eine diesbezügliche Strömungsverbindung geschaffen wird.

Der Druckausgang 14 des Belüftungsventils 12 und der Druckeingang 18 des Entlüftungsventils 20 stehen gemeinsam über die Vorsteuerdruckleitung 16 mit einem Vorsteuerdruck-Anschluss 24 eines Angleichventils 26 in Verbindung, das vorzugsweise ein elektromagnetisch betätigtes 3/2-Wege-Schaltventil ist.

Das Angleichventil 26, welches in Fig.1 zusammen mit den anderen Ventilen 2, 6, 12, 20 sinnbildhaft dargestellt ist, hat im weiteren einen Entlüftungs-Anschluss 28, der in die Umgebung entlüftet, sowie einen weiteren Anschluss 30, an den eine externe Kammer 36 angeschlossen ist.

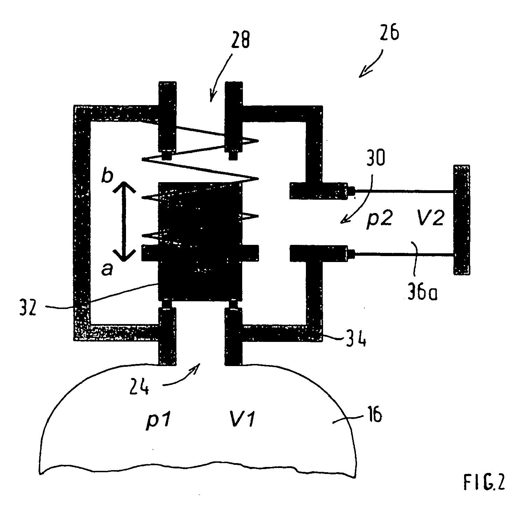

Um die Arbeitsweise des Angleichventils 26 zu veranschaulichen ist in Fig.2 eine weitere Ausführungsform in funktionsbezogener Darstellung gezeigt, bei welcher in einem Gehäuse 34 des Angleichventils 26 ein Schaltkolben 32 verschieblich geführt, welcher in einer Schaltstellung a den Vorsteuerdruck-Anschluss 24 sperrt und eine Strömungsverbindung zwischen einer Ventilkammer 36a und dem Entlüftungs-Anschluss 28 herstellt. Beispielsweise in diese stromlose Schaltstellung a ist der Schaltkolben 32 federbelastet, während er bestromt in eine weitere Schaltstellung b gelangt, in welcher er den Entlüftungs-Anschluss 28 sperrt und eine Strömungsverbindung zwischen dem Vorsteuerdruck-Anschluss 24 und der Ventilkammer 36 herstellt. Die Ventilkammer 36 ist innerhalb des Gehäuses 34 des Angleichventils 26 angeordnet und hat deshalb ein relativ kleines Volumen $V_2$. Der Druck in der Ventilkammer sei mit $p_2$ bezeichnet. Mit $V_1$ sei ein gegenüber dem Volumen $V_2$ der Ventilkammer 36a wesentlich größeres Volumen bezeichnet, welches dem Volumen des Inneren der Vorsteuerdruckleitung 16 entspricht, die unter dem Vorsteuerdruck A oder $p_1$ steht. Der Unterschied zum Ausführungsbeispiel von Fig.1 besteht folglich lediglich darin, dass anstatt einer externen, d.h. außerhalb des Gehäuses 24 des Angleichventils 26 angeordneten Kammer 36 eine interne Ventilkammer 36a vorhanden ist. Ansonsten ist der Aufbau und die Funktion des Angleichventils 26 jeweils identisch.

Das Belüftungsventil 12, das Entlüftungsventil 20 und das Angleichventil 26 sowie deren Verschaltung untereinander bilden zusammen die Steuerventileinrichtung 1, welche in Abhängigkeit des Reservoirdrucks R einen geregelten Vorsteuerdruck A für das Relaisventil 2 erzeugt. Hierzu ist eine in den Figuren nicht gezeigte Sensoreinrichtung vorhanden, welche den Ist-Vorsteuerdruck $A_{ist}$ an eine Steuerelektronik meldet, welche aufgrund eines Soll-Ist-Vergleichs eine Regeldifferenz berechnet und die Ventile 12, 20, 26 der Steuerventileinrichtung 1 derart ansteuert, dass ein Soll-Vorsteuerdruck $A_{soll}$ eingeregelt wird.

Vor diesem Hintergrund ist die Funktionsweise der Steuerventileinrichtung 1 wie folgt:

Zum Bremsen und Lösen wie auch für einen Füllstoß werden das Belüftungsventil 12 und das Entlüftungsventil 20 durch die Steuerelektronik angesteuert, um einen dem gewünschten Brems- bzw. Lösedruck entsprechenden Vorsteuerdruck A zu erzeugen. Diese Ventile 12, 20 sind in der Lage, die hierfür geforderten großen Druckgradienten zu liefern.

Falls jedoch der Druck HL in der Hauptluftleitung 4 über den Regelbetriebsdruck ansteigt, wie es beispielsweise nach einem Füllstoss der Fall ist, muss er im Rahmen des Angleichens innerhalb der Unempfindlichkeit des Steuerventils 6 langsam auf den Regelbetriebsdruck zurückgeführt werden, was durch Einregelung eines entsprechenden Vorsteuerdrucks A durch das Angleichventil 26 bewerkstelligt wird.

Das Angleichventil 26 wirkt dabei wie eine Schleuse, indem es zunächst von der Schaltstellung a in die Schaltstellung b (siehe Fig.2) geschaltet wird, in welcher durch den Vorsteuerdruck-Anschluss 24 ein bestimmtes Druckluftvolumen aus der Vorsteuerdruckleitung 16 in die Ventilkammer 36a eingeleitet wird, wodurch das gesamte für den Vorsteuerdruck A zur Verfügung stehende und durch das Innere der Vorsteuerdruckleitung 16 gebildete Volumen $V_1$ sich um das Volumen $V_2$ der Ventilkammer 36a vergrößert und folglich der Vorsteuerdruck A oder $P_1$ geringfügig sinkt.

Wenn nun von der Schaltstellung b in die Schaltstellung a zurückgeschaltet wird und folglich der Vorsteuerdruck-Anschluss 24 gesperrt und eine Strömungsverbindung zwischen der Ventilkammer 36a und dem Entlüftungs-Anschluss 28 hergestellt wird, so entweicht das zuvor in die Ventilkammer 36a eingeleitete Druckluftvolumen aus diesem aufgrund des Druckgefälles. Der gesperrte Vorsteuerdruck-Anschluss 24 verhindert dabei, dass über dieses Druckluftvolumen hinaus Druckluft aus der Vorsteuerdruckleitung 16 entweicht.

Für den Druck $P_1$ am Vorsteuerdruck-Anschluss 24 gilt dann folgendes : Befindet sich das Angleichventil 26 in der Schaltstellung a und wird dann in die Schaltstellung b umgeschaltet, so ändert sich der Druck $P_1$ am Vorsteuerdruck-Anschluss 24, stationär stellt sich bei idealem Schaltverhalten folgender neuer Druck $p_1^{k+1}$ ein :

$$p_1^{k+1} = \frac{p_1 V_1 + p_2^k V_2}{V_1 + V_2}$$

Die Druckänderung beträgt daher

$$\Delta p_1 = \frac{V_2}{V_1 + V_2}(p_2 - p_1)$$

und hängt nur von den Volumina $V_1$, $V_2$ und den gemessenen bzw. bekannten Drücken $p_1$ und $p_2$ ab. Beim Rückschalten in die Schaltstellung a bleibt der Druck $p_1$ erhalten. Bei entsprechender Wahl der Volumina $V_1$, $V_2$ lassen sich mittels eines Schaltzyklusses a -> b -> a folglich sehr kleine Druckänderungen $\Delta p_1$ erzielen.

Durch das reale Schaltverhalten des Angleichventils 26 ist die tatsächliche Druckänderung $\Delta p_1$ geringfügig höher.

Die Steuerung des Angleichventils 26 zeichnet sich daher dadurch aus, dass kein stabiler Zustand mit einem stetigen Volumenstrom existiert, sondern durch seriell hintereinander abfolgende Schaltvorgänge a -> b -> a zuerst ein begrenztes Volumen an Vorsteuerluft in die Ventilkammer 36a verbracht wird, welches dann aus dieser über den Entlüftungs-Anschluss 28 in die Umgebung entweicht, bevor die Ventilkammer 36a im Rahmen des nächsten Schaltvorgangs erneut mit Vorsteuerluft gefüllt wird. Mit jedem dieser Schaltzyklen a -> b -> a wird der Vorsteuerdruck A um einen kleinen Betrag gesenkt, und der Schaltzyklus solange wiederholt, bis ein vorgegebener Soll-Vorsteuerdruck erreicht ist, in dessen Abhängigkeit das Relaisventil 2 beispielsweise den Regelbetriebsdruck aussteuert. Wenn das Volumen $V_2$ der Ventilkammer 36a entsprechend klein ist, können auf geschilderte Weise sehr geringe Druckgradienten und folglich eine sehr feinfühlige Regelung des Vorsteuerdrucks A erzielt werden.

**Bezugszahlenliste**

| | |
|---|---|
| 1 | Steuerventileinrichtung |
| 2 | Relaisventil |
| 4 | Hauptluftleitung |
| 6 | Steuerventil |
| 8 | Reservoirleitung |
| 10 | Druckeingang |
| 12 | Belüftungsventil |
| 14 | Druckausgang |
| 16 | Vorsteuerdruckleitung |
| 18 | Druckeingang |
| 20 | Entlüftungsventil |
| 22 | Entlüftung |
| 24 | Vorsteuerdruck-Anschluss |
| 26 | Angleichventil |
| 28 | Entlüftungs-Anschluss |
| 30 | Anschluss |
| 32 | Schaltkolben |
| 34 | Gehäuse |
| 36 | Kammer |
| 36a | Ventilkammer |

**Patentansprüche**

1. Steuerventileinrichtung (1) für eine indirekt wirkende Druckluftbremse eines Schienenfahrzeugs, welche aus einem Reservoirdruck (R) einen Vorsteuerdruck (A) für ein in Abhängigkeit dieses Vorsteuerdrucks (A) einen Hauptluftleitungsdruck (HL) aussteuerndes Relaisventil (2) erzeugt, **dadurch gekennzeichnet, dass** sie ein Angleichventil (26) zum Angleichen des Vorsteuerdrucks (A) in Form eines Schaltventils beinhaltet, das wenigstens einen Anschluss (24) für den Vorsteuerdruck (A) und einen Anschluss (28) für eine Drucksenke aufweist und das in einer in einer ersten Schaltstellung (a) den Anschluss (24) für den Vorsteuerdruck (A) sperrt und eine Strömungsverbindung zwischen einer Kammer (36) und dem Anschluss (28) für die Drucksenke herstellt und in einer zweiten Schaltstellung (b) den Anschluss (28) für die Drucksenke sperrt und eine Strömungsverbindung zwischen dem Anschluss (24) für den Vorsteuerdruck (A) und der Kammer (36) herstellt.

2. Steuerventileinrichtung nach Anspruch 1, **dadurch gekennzeichnet, dass** das Schaltventil durch ein elektromagnetisch betätigtes 3/2-Wege-Schaltventil (26) gebildet wird.

3. Steuerventileinrichtung nach Anspruch 2, **dadurch gekennzeichnet, dass** das 3/2-Wege-Schaltventil (26) einen weiteren, stets gesperrten Anschluss (30) aufweist.

4. Steuerventileinrichtung nach Anspruch 3, **dadurch gekennzeichnet, dass** die Kammer durch eine innerhalb eines Gehäuses (34) des 3/2-Wege-Schaltventils (26) vorhandene Ventilkammer (36a) gebildet wird.

5. Steuerventileinrichtung nach Anspruch 2, **dadurch gekennzeichnet, dass** die Kammer durch ein an das 3/2-Wege-Schaltventil (26) angeschlossenes externes Volumen oder Behältnis (36) gebildet wird.

6. Steuerventileinrichtung nach wenigstens einem der vorhergehenden Ansprüche, **dadurch gekennzeichnet, dass** in Strömungsrichtung gesehen dem Angleichventil (26) wenigstens ein jeweils ebenfalls als Schaltventil ausgebildetes Belüftungsventil (12) und Entlüftungsventil (20) vorgeordnet ist.

7. Verfahren zur Steuerung der Steuerventileinrichtung nach wenigstens einem der vorhergehenden Ansprüche, **dadurch gekennzeichnet, dass** das Angleichventil (26) innerhalb eines Schaltzyklusses von der ersten Schaltstellung (a) in die zweite Schaltstellung (b) und wieder zurück in die erste Schaltstellung (a) geschaltet wird.

8. Verfahren nach Anspruch 7, **gekennzeichnet durch** ein mehrmaliges Wiederholen des Schaltzyklusses bis ein Soll-Vorsteuerdruck erreicht ist.

**Claims**

1. Control valve device (1) for an indirectly operative compressed-air brake of a rail vehicle, which generates a pilot pressure (A) from a reservoir pressure (R) for a relay valve (2) adjusting a brake pipe pressure (HL in response to said pilot pressure (A), **characterised in that** it includes a adjusting valve (26) for adjusting said pilot pressure (A) in the form of a switching valve that comprises at least one connector (24) for said pilot pressure (A) and one connector (28) for a pressure sink and that shuts off said connector (24) for said pilot pressure (A) and establishes a fluid communication between a chamber (36) and said connector (28) for said pressure sink when it is in a first switching position (a), whilst it shuts off said connector (28) for said pressure sink and establishes a fluid communication between said connector (24) for said pilot pressure (A) and said chamber (36) when it is in a second switching position (b).

2. Control valve device according to Claim 1, **characterised in that** said switching valve is constituted by an electromagnetically operable 3/2-way switching valve (26.

3. Control valve device according to Claims 2, **characterised in that** said 3/2-way switching valve (26) comprises a further permanently shut-off connector (30).

4. Control valve device according to Claim 3, **characterised in that** said chamber is constituted by a valve chamber (36a) present in the interior of a housing (34) of said 3/2-way switching valve (26).

5. Control valve device according to Claim 2, **characterised in that** said chamber is formed by an external volume or receptacle (36) connected to said 3/2-way switching valve (26).

6. Control valve device according to at least one of the preceding Claims, **characterised in that** at least one aeration valve (12) and ventilation valve (20), which is equally configured as switching vale, is disposed upstream of said adjusting valve (26), when seen along the direction of flow.

7. Method of controlling the control valve device according to at least one of the preceding Claims, **characterised in that** said adjusting valve (26) is switching from said first switching position (a) into said second switching position (b) and back again into said first switching position (a) within one switching cycle.

8. Method according to Claim 7, **characterised by** multiple repetition of said switching cycle until a rated pilot pressure is achieved.


## Revendications

1. Système de soupape de commande (1) pour un frein à air comprimé à action indirecte d'un véhicule sur rails, qui, à partir d'une pression de réservoir (R), engendre une pression de commande pilote (A) pour une soupape relais (2) qui commande une pression de conduite d'air principale (HL) en fonction de ladite pression de commande pilote (A), **caractérisé en ce que** qu'il renferme une soupape d'adaptation compensatoire (26) pour l'adaptation compensatoire de la pression de commande pilote (A), sous la forme d'une soupape de commutation qui comprend au moins un raccord (24) pour la pression de commande pilote (A) et un raccord (28) pour un abaissement de pression, et qui dans une première position de commutation (a), ferme le raccord (24) pour la pression de commande pilote (A) et établit une liaison d'écoulement entre une chambre (36) et le raccord (28) pour l'abaissement de pression, et dans une deuxième position de commutation (b), ferme le raccord (28) pour l'abaissement de pression et établit une liaison d'écoulement entre le raccord (24) pour la pression de commande pilote (A) et la chambre (36).

2. Système de soupape de commande selon la revendication 1, **caractérisé en ce que** la soupape de commutation est formée par une soupape de commutation ou un distributeur 3/2 (3 orifices, 2 voies) (26) actionné par voie électromagnétique.

3. Système de soupape de commande selon la revendication 2, **caractérisé en ce que** le distributeur 3/2 présente un autre raccord (30) toujours fermé.

4. Système de soupape de commande selon la revendication 3, **caractérisé en ce que** la chambre est formée par une chambre de soupape (36a) existant à l'intérieur d'un carter (34) du distributeur 3/2 (26).

5. Système de soupape de commande selon la revendication 2, **caractérisé en ce que** la chambre est formée par un volume ou un récipient (36) externe raccordé au distributeur 3/2 (26).

6. Système de soupape de commande selon l'une au moins des revendications précédentes, **caractérisé en ce que** vu dans la direction de l'écoulement, la soupape d'adaptation compensatoire (26) est précédée par au moins une soupape de ventilation (12) et une soupape de purge (20), chacune également réalisée sous la forme d'une soupape de commutation ou d'un distributeur.

7. Procédé pour le pilotage du système de soupape de commande selon l'une au moins des revendications précédentes, **caractérisé en ce que** la soupape d'adaptation compensatoire (26) est commutée pendant un cycle de commutation, de la première position de commutation (a) dans la deuxième position de commutation (b) et à nouveau en retour dans la première position de commutation (a).

8. Procédé selon la revendication 7, **caractérisé par** une répétition multiple du cycle de commutation jusqu'à atteindre une pression de commande pilote de consigne.

FIG.1

FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0032567 A